# EUROPÄISCHE PATENTSCHRIFT

(11) **EP 1 322 700 B1**
(45) Veröffentlichungstag und Bekanntmachung des Hinweises auf die Patenterteilung: **26.07.2006**
(21) Anmeldenummer: 01978355.4
(22) Anmeldetag: 10.09.2001
(51) Int. Cl.: C08K 5/103, C08L 25/04, C08L 51/04, C08L 55/02, C08L 25/12, C08K 5/20, C08K 5/09

(54) **FORMMASSEN MIT DIBENZOAT-ADDITIV**
MOULDING MATERIALS WITH A DIBENZOATE ADDITIVE
MATIERES MOULABLES CONTENANT UN ADDITIF DIBENZOATE

(30) Priorität: 21.09.2000 DE 10046773
(43) Veröffentlichungstag der Anmeldung: 02.07.2003
(73) Patentinhaber: LANXESS Deutschland GmbH, 51369 Leverkusen (DE)
(72) Erfinder: SIEBOURG, Wolfgang, 53173 Bonn (DE); LEITZ, Edgar, 41541 Dormagen (DE); EICHENAUER, Herbert, 41539 Dormagen (DE)
(86) Internationale Anmeldenummer: PCT/EP2001/010426
(87) Internationale Veröffentlichungsnummer: WO 2002/024800

(56) Entgegenhaltungen:
- WO-A-97/16481
- WO-A-99/06349
- ARENDT ET AL: "NEW BENZOATE PLASTICIZERS FOR LATEX ADHESIVES" ADHESIVES AGE, ATLANTA, GA, US, Bd. 41, Nr. 3, 1. März 1998 (1998-03-01), Seiten 36-39, XP002084308
- "Material safety data sheet Benzoflex 2870" 14. Mai 1999 (1999-05-14) , VELSICOL CHEM CORP , NORTHBROOK US XP002188702 Absätze [SECTION]-[00II]
- "Material safety data sheet Benzoflex 2160" 30. Mai 2001 (2001-05-30) , VELSICOL CHEM CORP , NORTHBROOK US XP002188703 Absätze [SECTION]-[00II]

## Beschreibung

Gegenstand der vorliegenden Erfindung sind Zusammensetzungen enthaltend Matrix-Polymer, Pfropf-Polymer und spezielle Additivkombinationen, deren Verwendung zur Herstellung von Formkörpern sowie daraus erhältliche Formkörper. Gegenstand der Erfindung ist ferner auch die Verwendung der Additivkombination.

ABS-Formmassen werden schon seit vielen Jahren in großen Mengen als thermoplastische Harze für die Herstellung von Formteilen aller Art eingesetzt. Dabei reicht das Eigenschaftsspektrum dieser Harze von relativ spröde bis hochzäh.

Ein spezielles Einsatzgebiet für ABS-Formmassen ist die Herstellung von Formteilen durch Spritzgießen (z.B. Gehäuse, Spielzeug, Kfz.-Teile), wobei es insbesondere auf eine sehr gute Fließfähigkeit des Polymermaterials ankommt. Außerdem müssen die so hergestellten Formteile in der Regel eine gute Kerbschlagzähigkeit aufweisen.

Es besteht die Aufgabe, ABS-Formmassen mit sehr guter thermoplastischer Fließfähigkeit unter Erhalt guter Zähigkeitswerte zur Verfügung zu stellen, wobei diese Eigenschaften ohne Veränderung der eingesetzten polymeren Grundbausteine erreicht werden sollen. Die üblicherweise verwendete Methode, die Einsatzmenge an eingesetztem Verarbeitungshilfsmittel zu erhöhen, führt in der Regel zu Einbußen bei sonstigen Eigenschaften sowie zu einem deutlichen Anstieg der Kosten.

WO 97/16481 beschreibt die Verwendung von Dibenzoaten zur Herstellung von Verfugungsmassen, wobei eine gute Resistenz gegen Pilzbefall resultiert.

WO 99/06349 beschreibt die Verwendung von Dibenzoaten als Weichmacher für PVC bzw. Vinylchlorid-haltige Polymerisate, wobei der Vorteil darin liegt, dass die Weichmacher über einen breiten Temperaturbereich in flüssiger Form vorliegen.

Es wurde nun gefunden, dass durch Einsatz spezieller Additivmischungen ABS-Formmassen mit einer sehr guten thermoplastischen Verarbeitbarkeit unter Erhalt guter Zähigkeitswerte zugänglich sind.

Gegenstand der Erfindung sind thermoplastische Formmassen (bzw. Zusammensetzungen) enthaltend
A) 5 bis 95 Gew.-%, bevorzugt 10 bis 90 Gew.-% und besonders bevorzugt 20 bis 75 Gew.-% eines oder mehrerer thermoplastischer Homo-, Co- oder Terpolymerisate von Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus
B) 5 bis 95 Gew.-%, bevorzugt 10 bis 90 Gew.-% und besonders bevorzugt 25 bis 80 Gew.-% eines oder mehrerer Pfropfpolymerisate von
   B.1) 5 bis 90 Gew.-Teilen, vorzugsweise 20 bis 80 Gew.-Teilen und besonders bevorzugt 25 bis 60 Gew.-Teilen Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus auf
   B.2) 95 bis 10 Gew.-Teile, vorzugsweise 80 bis 20 Gew.-Teile und besonders bevorzugt 75 bis 40 Gew.-Teile mindestens eines Kautschuks mit einer Glastemperatur ≤ 10°C
      und
C) 0,5 bis 10 Gew.-Teile, vorzugsweise 1 bis 8 Gew.-Teile und besonders bevorzugt 1,5 bis 6 Gew.-Teile (jeweils pro 100 Gew.-Teile A) + B)) einer Kombination aus a) mindestens einem Dibenzoat von Di- oder Trialkylenglykolen und b) mindestens einer Verbindung mit mindestens einer Struktureinheit 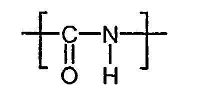 und/oder c) mindestens einer Verbindung mit mindestens einer Struktureinheit

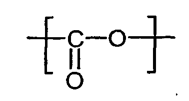

Jede der Verbindungen b) und c) enthält vorzugsweise mindestens einen endständigen aliphatischen C₆-C₃₂-Kohlenwasserstoff-Rest.

Erfindungsgemäß geeignete thermoplastische Polymerisate A) sind solche von Styrol, α-Methylstyrol, p-Methylstyrol, Vinyltoluol, Halogenstyrol, Methylacrylat, Methylmethacrylat, Acrylnitril, Maleinsäureanhydrid, N-substituiertem Maleinimid oder Mischungen daraus.

Die Polymerisate A) sind harzartig, thermoplastisch und kautschukfrei. Besonders bevorzugte Polymerisate A) sind solche aus Styrol, Methylmethacrylat, Styrol/Acrylnitril-Gemischen, Styrol/Acrylnitril/Methylmethacrylat-Gemischen, Styrol/Methylmethacrylat-Gemischen, Acrylnitril/Methylmethacrylat-Gemischen, α-Methylstyrol/Acrylnitril-Gemischen, Styrol/α-Methylstyrol/Acrylnitril-Gemischen, α-Methylstyrol/Methyhnethacrylat/Acrylnitril-Gemischen, Styrol/α-Methylstyrol/Methmethacrylat-Gemischen, Styrol/α-Methylstyrol/Methmethaerylat/Acrylnitril-Gemischen, Styrol/Maleinsäureanhydrid-Gemischen, Methylmethacrylat/Maleinsäureanhydrid-Gemischen, Styrol/Methyhnethacrylat/Maleinsäureanhydrid-Gemischen, Styrol/-Acrylnitrit/N-Phenylmaleinimid-Gemischen.

Die Polymerisate A) sind bekannt und lassen sich durch radikalische Polymerisation, insbesondere durch Emulsions-, Suspensions-, Lösungs- oder Massepolymerisation herstellen. Sie besitzen vorzugsweise Molekulargewichte M̅_{w} von 20 000 bis 200 000 bzw. Grenzviskositäten [η] von 20 bis 110 ml/g /gemessen in Dimethylformamid bei 25°C).

Zur Herstellung der Pfropfpolymerisate B) geeignete Kautschuke sind insbesondere Polybutadien, Butadien/Styrol-Copolymerisate, Butadien/Acrylnitril-Copolymerisate, Polyisopren oder Alkylacrylatkautschuke auf der Basis von C₁-C₈-Alkylacrylaten, insbesondere Ethyl-, Butyl-, Ethylhexylacrylat.

Die Acrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Die Acrylatkautschuke können auch kleine Mengen, vorzugsweise bis zu 5 Gew.-% (bezogen auf Kautschukgewicht) vernetzend wirkender, ethylenisch ungesättigter Monomerer einpolymerisiert enthalten. Vemetzer sind z.B. Alkylendioldiacrylate und -methacrylate, Polyester-diacrylate und -methacrylate, Divinylbenzol, Trivinylbenzol, Triallylcyanurat, Allylacrylat und -methacrylat, Butadien und Isopren, Pfropfgrundlage können auch Acrylatkautschuke mit Kern/Schalen-Struktur sein mit einem Kern aus vemetztem Dienkautschuk aus einem oder mehreren konjugierten Dienen, wie Polybutadien, oder einem Copolymerisat eines konjugierten Diens mit einem ethylenisch ungesättigten Monomer wie Styrol und/oder Acrylnitril.

Weitere geeignete Kautschuke sind z.B. die sogenannten EPDM-Kautschuke (Polymerisate aus Ethylen, Propylen und einem nicht-konjugierten Dien wie z.B. Dicyclopentadien), EPM-Kautschuke (Ethylen/Propylen-Kautschuke) und Silikonkautschuke, die gegebenenfalls ebenfalls eine Kem/Schalen-Struktur aufweisen können.

Bevorzugte Kautschuke zur Herstellung der Pfropfpolymerisate B) sind Dien- und Alkylacrylatkautschuke sowie EPDM-Kautschuke.

Die Kautschuke liegen im Pfropfpolymerisat B) in Form wenigstens partiell vernetzter Teilchen eines mittleren Teilchendurchmessers (d₅₀) von 0,05 bis 20 µm, bevorzugt von 0,1 bis 2 µm und besonders bevorzugt von 0,1 bis 0,8 µm, vor. Der mittlere Teilchendurchmesser d₅₀ wird ermittelt durch Ultrazentrifugemnessungen nach W. Scholtan et al., Kolloid-Z. u.Z. Polymere 250 (1972), 782-796 oder durch Auswertung elektronenmikroskopischer Aufnahmen.

Die Polymerisate B) können durch radikalische Pfropfpolymerisation der Monomeren B.1) in Gegenwart der zu bepfropfenden Kautschuke B.2) hergestellt werden.

Bevorzugte Herstellungsverfahren für die Pfropfpolymerisate B) sind Emulsions-, Lösungs-, Masse- oder Suspensionspolymerisation und an sich bekannten Kombinationen aus diesen Verfahren. Besonders bevorzugte Pfropfpolymerisate B) sind die ABS-Polymerisate.

Ganz besonders bevorzugte Polymerisate B) sind Produkte, die durch radikalische Polymerisation von Mischungen aus Styrol und Acrylnitril, vorzugsweise im Gewichtsverhältnis 10:1 bis 1:1, besonders bevorzugt im Gewichtsverhältnis 5:1 bis 2:1, in Gegenwart eines aus überwiegend Dienmonomeren (vorzugsweise Polybutadien, das bis zu 30 Gew.% Styrol und/oder Acrylnitril als Comonomere enthalten kann) aufgebauten Kautschuks mit einem mittleren Teilchendurchmesser (d₅₀) von 100 bis 450 nm, ganz besonders bevorzugt in Gegenwart zweier aus überwiegend Dienmonomeren (vorzugsweise Polybutadien, das bis zu 30 Gew.% Styrol und/oder Acrylnitril als Comonomere enthalten kann) aufgebauter Kautschuke mit a) einem mittleren Teilchendurchmesser (d₅₀) von 150 bis 300 nm und b) einem mittleren Teilchendurchmesser (d₅₀) von 350 bis 450 nm im Gewichtsverhältnis (a):(b) = 10:90 bis 90:10, vorzugsweise 30:70 bis 60:40, erhalten wurden.

Der Kautschukgehalt der Polymerisate B) beträgt vorzugsweise 40 bis 95 Gew.-%, besonders bevorzugt 50 bis 90 Gew.-% und ganz besonders bevorzugt 55 bis 85 Gew.-%.

Als Einzelkomponenten der Additivmischung C) sind beispielsweise und bevorzugt geeignet:
Als Komponente a): Diethylenglykoldibenzoat, Triethylenglykoldibenzoat, Dipropylenglykoldibenzoat, Tripropylenglykoldibenzoat; besonders bevorzugt sind Mischungen ausgewählt aus diesen Verbindungen.

Als Komponente b): Ethylendiaminbisstearylamid, Erucasäureamid, Ölsäureamid, Stearinsäureamid, Behensäureamid, Montansäureamid, bevorzugt sind Ethylendiaminbisstearylamid und/oder Erucasäureamid, besonders bevorzugt ist Ethylendiaminbisstearylamid.

Als Komponente c): Glycerintristearat, Glycerintrioleat, Glycerintribehenat, Glycerintrimontanat, Stearylstearat, Stearyloleat, Stearylbehenat, Stearylmontanat, Oleylstearat, Oleyloleat, Oleylbehenat, Oleylmontanat, Behenylstearat, Behenyloleat, Behenylbehenat, Behenylmontanat, Octylstearat, Isooctylstearat, Dodecylstearat, Dodecyloleat, Glycerinmonostearat, Glycerindistearat, Glycerinmonooleat, Glycerindioleat, Pentaerythrittetrastearat, Pentaerythrittetraoleat, Pentaerythrittetrabehenat, Pentaerythrittetramontanat, Pentaerythrittristearat, Pentaerythrittrioleat, Pentaerythrittribehenat, Pentaerythrittrimontanat, Pentaerythritdistearat, Pentaerythritdioleat, Pentaerythritdibehenat, Pentaerrythritdimontanat, Pentaerythritmonostearat, Pentaerythritmonooleat, Pentaerythrittrimonobehenat, Pentaerythritmonomontanat; bevorzugt sind Glycerintristearat, Stearylstearat oder Pentaerythrittetrastearat, besonders bevorzugt sind Glycerintristearat oder Pentaerythrittetrastearat oder jeweils Mischungen hieraus.

Zusätzlich können die erfindungsgemäßen Formmassen weitere die Verarbeitbarkeit fördernde Additivkomponenten enthalten.

Beispiele für derartige Verbindungen sind z.B. metallhaltige langkettige Substanzen wie beispielsweise und bevorzugt Magnesiumstearat, Calciumstearat, Zinkstearat, Magnesiummontanat, Calciummontanat, Zinkmontanat, Magnesiumbehenat, Calciumbehenat, Zinkbehenat, Magnesiumoleat, Calciumoleat, Zinkoleat; bevorzugt sind Magnesiumstearat oder Calciumstearat, besonders bevorzugt ist Magnesiumstearat oder andere langkettige Substanzen wie z.B. und bevorzugt Paraffinöle, Kohlenwasserstoffwachse, niedermolekulares Polystyrol hergestellt unter Verwendung von C₈-C₁₈-Alkylmercaptanen als Molekulargewichtsregler mit mittleren Molekulargewichten (M̅_{W}) zwischen 2 000 und 15 000, vorzugsweise zwischen 2500 und 12 000 und besonders bevorzugt zwischen 3 000 und 10 000, niedermolekulares Styrol/Acrylnitril-Copolymerisat hergestellt unter Verwendung von C₈-C₁₈-Alkylmercaptanen als Molekulargewichtsregler mit mittleren Molekulargewichten (M̅_{w}) zwischen 2 000 und 15 000, vorzugsweise zwischen 2 500 und 12 000 und besonders bevorzugt zwischen 3 000 und 10 000, niedermolekulares α-Methylstyrol/Acrylnitril-Copolymerisat hergestellt unter Verwendung von C₈-C₁₈-Alkylmercaptanen als Molekulargewichtsregler mit mittleren Molekulargewichten (M̅_{w}) zwischen 2 000 und 15 000, vorzugsweise zwischen 2 500 und 12 000 und besonders bevorzugt zwischen 3 000 und 10 000, niedermolekulares Polymethylmethacrylat hergestellt unter Verwendung von C₈-C₁₈-Alkylmercaptanen als Molekulargewichtsregler mit mittleren Molekulargewichten (M̅_{W}) zwischen 2 000 und 15 000, vorzugsweise zwischen 2500 und 12 000 und besonders bevorzugt zwischen 3 000 und 10 000, C₆-C₃₂-Alkanole, z.B. und bevorzugt Stearylalkohol, C₆-C₃₂-Alkenole, z.B. und bevorzugt Oleylalkohol.

Bevorzugt sind Paraffinöle, niedermolekulare Styrol/Acrylnitril-Copolymerisate oder α-Methylstyrol/Acrylnitril-Copolymerisate, besonders bevorzugt sind Paraffinöle oder niedermolekulare Styrol/Acrylnitril-Copolymerisate oder jeweils Mischungen hieraus.

Die Gew.-Verhältnisse beim erfindungsgemäßen Einsatz der Komponenten a) und b) und/oder c) in der Additivkomponente C) betragen (a):(b) bzw. (a):(b+c) bzw. (a):(c) = 10:1 bis 1:5, vorzugsweise 8:1 bis 1:4 und besonders bevorzugt 5:1 bis 1:2.

Besonders bevorzugte Mischungen bestehen aus 15 bis 65 Gew.-% Pfropfpolymerisat von 25 bis 60 Gew.-Teilen Styrol, α-Methylstyrol, Acrylnitril, N-Phenylmaleinimid oder Mischungen daraus auf 75 bis 40 Gew-Teile Polybutadien, das bis zu 30 Gew.% Styrol und/oder Acrylnitril als Comonomere enthalten kann,

85 bis 35 Gew.-% thermoplastischem Copolymerisat aus 5 bis 40 Gew.-Teilen Acrylnitril und 95 bis 60 Gew.-Teilen Styrol, α-Methylstyrol, N-Phenylmaleinimid oder Mischungen daraus und

1,5 bis 6 Gew.-Teilen pro 100 Gew.-Teilen A+B einer Kombination aus
a) einer Mischung aus Diethylenglykoldibenzoat, Triethylenglykoldibenzoat und Dipropylenglykoldibenzoat,
b) Ethylendiaminbisstearylamid und/oder
c) Pentaerythrittetrastearat oder Glycerinstearat.

Die erfindungsgemäßen Mischungen, enthaltend A), B) und C) und gegebenenfalls übliche Zusatzstoffe wie Verarbeitungsmittel, Stabilisatoren, Pigmente, Antistatika, Füllstoffe werden hergestellt, indem man die jeweiligen Bestandteile in bekannter Weise simultan oder sukzessive bei Zimmertemperatur oder bei höherer Temperatur vermischt und danach bei Temperaturen von 150°C bis 300°C in gebräuchlichen Aggregaten wie Innenknetern, Extrudern oder Doppelwellenschnecken schmelzcompoundiert oder schmelzextrudiert.

Die Formmassen der vorliegenden Erfindung können zur Herstellung von Formkörpern jeder Art verwendet werden, wobei übliche Herstellungsweisen benutzt werden können, insbesondere können Formkörpern durch Spritzguß hergestellt werden.

Eine weitere Form der Verarbeitung der erfindungsgemäßen Formmassen ist die Herstellung von Formkörpern durch Tiefziehen aus vorher nach bekannten Verfahren hergestellten Platten oder Folien.

Gegenstand der vorliegenden Erfindung ist daher ein Verfahren zur Herstellung der Zusammensetzungen, deren Verwendung zur Herstellung von Formkörpern sowie die daraus erhältlichen Formkörper. Gegenstand der vorliegenden Erfindung ist weiterhin die Additivkombination selbst.

### Beispiele

### Thermoplastharz A1

Statistisches Styrol/Acrylnitril (72:28) - Copolymerisat mit einem M̅_{w} von ca. 85 000, ermittelt durch GPC (Gelpermeationschromatographie).

### Pfropfpolymerisat B1

Pfropfprodukt erhalten durch Emulsionspolymerisation von 42 Gew.-% eines Styrol/Acrylnitril-Gemisches (Gewichtsverhältnis 73:27) auf 58 Gew.-% einer 1:1-Mischung (Gewichtsverhältnis) zweier teilchenförmiger Polybutadiene mit a) einem mittleren Teilchendurchmesser (d₅₀) von 290 nm und b) einem mittleren Teilchendurchmesser (d₅₀) von 420 nm. Aufarbeitung durch Koagulation des Latex mit Magnesiumsulfat, Waschen mit Wasser und anschließende Trocknung im Vakuum.

### Pfropfpolymerisat B2

Pfropfprodukt erhalten durch Emulsionspolymerisation von 50 Gew.-% eines Styrol/Acrylnitril-Gemisches (Gewichtsverhältnis 73:27) auf 50 Gew.-% teilchenförmiges Polybutadien mit einem mittleren Teilchendurchmesser (d₅₀) von 130 nm. Aufarbeitung wie unter B1.
- Additiv Ca:: Benzoflex® 2088 (Gemisch aus 50 Gew.-% Diethylenglykoldibenzoat, 25 Gew.-% Triethylenglykoldibenzoat und 25 Gew.-% Dipropylenglykoldibenzoat (Velsicol, Rosemont, IL., USA)
- Additiv Cb:: Ethylendiaminbisstearylamid (Henkel KG, Düsseldorf, Deutschland)
- Additiv Cc:: Pentaerythrittetrastearat (Henkel KG, Düsseldorf, Deutschland)

Die Einzelkomponenten werden in den in Tabelle 1 angegebenen Gewichtsanteilen zusammen mit 0,5 Gew.-Teilen Magnesiumstearat und 0,15 Gew.-Teilen eines Silikonöls auf einem 1,3 1-Innenkneter bei Temperaturen von 160°C bis 200°C compoundiert. Die Formkörper werden auf einer Spritzgießmaschine bei 240°C hergestellt.

Die Kerbschlagzähigkeit wird bei Raumtemperatur (aₖ^{RT}) und bei -30°C (aₖ^{-30°C}) nach ISO 180/1A (Einheit: kJ/m²) ermittelt, die Beurteilung der thermoplastischen Fließfähigkeit erfolgt durch Messung des Schmelzfließindex (MVR) gemäß DIN 53 735 U (Einheit: cm³/10 min).

Wie ebenfalls aus Tabelle 1 ersichtlich ist, wird nur bei Einsatz der erfindungsgemäßen Mischungen eine sehr gute Kombination aus guter Zähigkeit und ausgezeichneter thermoplastischer Verarbeitbarkeit erreicht.

**Tabelle 1: Zusammensetzungen und Prüfdaten der Formmassen**

| Beispiel Nr. | A Gew.-Teile | B1 Gew.-Teile | B2 Gew.-Teile | Ca Gew.-Teile | Cb Gew.-Teile | Cc Gew.-Teile | aₖ^{RT} (kJ/m²) | aₖ^{-30°C} (kJ/m²) | MVR (cm³/ 10 min) |
|---|---|---|---|---|---|---|---|---|---|
| 1 | 75 | 12,5 | 12,5 | 1 | 1 | - | 14 | 8 | 38 |
| 2 | 75 | 12,5 | 12,5 | 2 | 1 | - | 13 | 8 | 45 |
| 3 | 75 | 12,5 | 12,5 | 2 | - | 1 | 17 | 8 | 39 |
| 4 | 75 | 12,5 | 12,5 | 1 | 2 | - | 15 | 7 | 45 |
| 5 | 75 | 12,5 | 12,5 | 2 | 2 | - | 14 | 7 | 53 |
| 6 | 75 | 12,5 | 12,5 | 3 | 2 | - | 14 | 6 | 62 |
| 7 (Vergl.) | 75 | 12,5 | 12,5 | 1 | - | - | 13 | 8 | 30 |
| 8 (Vergl.) | 75 | 12,5 | 12,5 | 2 | - | - | 13 | 8 | 34 |
| 9 (Vergl.) | 75 | 12,5 | 12,5 | - | 1 | - | 14 | 8 | 27 |
| 10 (Vergl.) | 75 | 12,5 | 12,5 | - | 2 | - | 14 | 7 | 35 |
| 11 (Vergl.) | 75 | 12,5 | 12,5 | - | - | 1 | 17 | 9 | 27 |
| 12 (Vergl.) | 75 | 12,5 | 12,5 | - | - | - | 14 | 8 | 25 |

## Patentansprüche

1. Zusammensetzungen enthaltend
A) 5 bis 95 Gew.-% eines oder mehrerer thermoplastischer Homo-, Co-oder Terpolymerisate von Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus
B) 5 bis 95 Gew.-% eines oder mehrerer Pfropfpolymerisate von
B.1) 5 bis 90 Gew.-Teilen Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus auf
B.2) 95 bis 10 Gew.-Teile mindestens eines Kautschuks mit einer Glastemperatur ≤ 10°C
und
C) 0,5 bis 10 Gew.-Teile (pro 100 Gew.-Teile A) + B)) einer Kombination aus a) mindestens einem Dibenzoat von Di- oder Trialkylenglykolen und b) mindestens einer Verbindung mit mindestens einer Struktureinheit 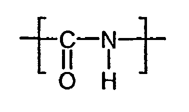 und/oder c) mindestens einer Verbindung mit mindestens einer Struktureinheit

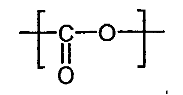

2. Zusammensetzungen gemäß Anspruch 1, wobei jede der Verbindungen b) und c) mindestens einen endständigen C₆-C₃₂-Kohlenwasserstoff Rest enthält.

3. Zusammensetzungen gemäß Anspruch 1 oder 2, wobei Verbindung a) ausgewählt ist aus Diethylenglykoldibenzoat, Triethylenglykoldibenzoat, Dipropylenglykoldibenzoat. Tripropylenglykoldibenzoat oder Mischungen daraus.

4. Zusammensetzungen gemäß Anspruch 1 oder 2, wobei Verbindung b) ausgewählt ist aus Ethylendiaminbisstearylamid, Erucasäureamid, Ölsäureamid, Stearinsäureamid, Behensäureamid, Montansäureamid.

5. Zusammensetzungen gemäß Anspruch 1 oder 2, wobei Verbindung c) ausgewählt ist aus Glycerintristearat, Glycerintrioleat, Glycerintribehenat, Glycerintrimontanat, Stearylstearat, Stearyloleat, Stearylbehenat, Stearylmontanat, Oleylstearat, Oleyloleat, Oleylbehenat, Oleylmontanat, Behenylstearat, Behenyloleat, Behenylbehenat, Behenylmontanat, Octylstearat, Isooctylstearat, Dodecylstearat, Dodecyloleat, Glycerinmonostearat, Glycerindistearat, Glycerinmonooleat, Glycerindioleat, Pentaerythrittetrastearat, Pentaerythrittetraoleat, Pentaerythrittetrabehenat, Pentaerythrittetramontanat, Pentaerythrittristearat, Pentaerythrittrioleat, Pentaerythrittribehenat, Pentaerythrittrimontanat, Pentaerythritdistearat, Pentaerythritdioleat, Pentaerythritdibehenat, Pentaerrythritdimontanat, Pentaerythritmonostearat, Pentaerythritmonooleat, Pentaerythrittrimonobehenat, Pentaerythritmonomontanat.

6. Zusammensetzungen gemäß einem oder mehreren der vorhergehenden Ansprüche, wobei die Verbindungen a), b) und c) jeweils ausgewählt sind aus:
Verbindung a): Diethylenglykoldibenzoat, Triethylenglykoldibenzoat, Dipropylenglykoldibenzoat und Tripropylenglykoldibenzoat
Verbindung b): Ethylendiaminbisstearylamid und Erucasäureamid
Verbindung c): Glycerinstearat, Stearylstearat und Pentaerythrittetrastearat.

7. Zusammensetzungen gemäß einem oder mehreren der vorhergehenden Ansprüche, wobei die Mengenverhältnisse (a):(b) bzw. (a):(b+c) bzw. (a):(c) = 10:1 bis 1:5 betragen.

8. Zusammenstzungen gemäß einem oder mehreren der vorhergehenden Ansprüche enthaltend 1,5 bis 6 Gew.-Teile C) pro 100 Gew.-Teilen A+B.

9. Zusammensetzungen gemäß einem oder mehreren der vorhergehenden Ansprüche, wobei Komponente B.2 ausgewählt ist aus Dien- und Alkylacrylatkautschuken.

10. Zusammensetzungen gemäß einem oder mehreren der vorhergehenden Ansprüche, enthaltend Verarbeitungshilfsmittel, Stabilisatoren, Pigmente, Antistatika und/oder Füllstoffe.

11. Verwendung der Zusammensetzungen nach einem oder mehreren der vorhergehenden Ansprüche zur Herstellung von Formkörpern.

12. Formkörper, erhältlich aus Zusammensetzungen nach einem oder mehreren der vorhergehenden Ansprüche.

13. Verwendung einer Additivkombination enthaltend a) mindestens ein Dibenzoat von Di- oder Trialkylenglykolen und b) mindestens eine Verbindung mit mindestens einer Struktureinheit 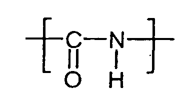 und/oder c) mindestens eine Verbindung mit mindestens einer Struktureinheit 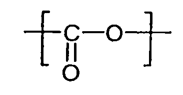 in ABS-Formmassen.

## Claims

1. Compositions comprising
A) from 5 to 95% by weight of one or more thermoplastic homo-, co- or terpolymers of styrene, of α-methylstyrene, of ring-substituted styrene, of methyl methacrylate, of acrylonitrile, of methacrylonitrile, of maleic anhydride, of N-substituted maleimide, or mixtures thereof
B) from 5 to 95% by weight of one or more graft polymers of
B.1) from 5 to 90 parts by weight of styrene, α-methylstyrene, of ring-substituted styrene, of methyl methacrylate, of acrylonitrile, of methacrylonitrile, of maleic anhydride, of N-substituted maleimide, or mixtures thereof onto
B.2) from 95 to 10 parts by weight of at least one rubber whose glass transition temperature is ≤ 10°C
and
C) from 0.5 to 10 parts by weight (per 100 parts by weight of A) + B)) of a combination composed of a) at least one dibenzoate of di- or trialkylene glycols and b) at least one compound having at least one structural unit 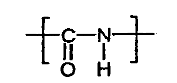 and/or c) at least one compound having at least one structural unit

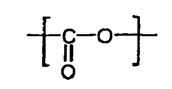

2. Compositions according to Claim 1, where each of the compounds b) and c) contains at least one terminal C₆-C₃₂-hydrocarbon radical.

3. Compositions according to Claim 1 or 2, where compound a) has been selected from diethylene glycol dibenzoate, triethylene glycol dibenzoate, dipropylene glycol dibenzoate, tripropylene glycol dibenzoate, or mixtures thereof.

4. Compositions according to Claim 1 or 2, where compound b) has been selected from ethylenediaminebisstearylamide, erucamide, oleamide, stearamide, behenamide, montanamide.

5. Compositions according to Claim 1 or 2, where compound c) has been selected from glycerol tristearate, glycerol trioleate, glycerol tribehenate, glycerol trimontanate, stearyl stearate, stearyl oleate, stearyl behenate, stearyl montanate, oleyl stearate, oleyl oleate, oleyl behenate, oleyl montanate, behenyl stearate, behenyl oleate, behenyl behenate, behenyl montanate, octyl stearate, isooctyl stearate, dodecyl stearate, dodecyl oleate, glycerol monostearate, glycerol distearate, glycerol monooleate, glycerol dioleate, pentaerythritol tetrastearate, pentaerythritol tetraoleate, pentaerythritol tetrabehenate, pentaerythritol tetramontanate, pentaerythritol tristearate, pentaerythritol trioleate, pentaerythritol tribehenate, pentaerythritol trimontanate, pentaerythritol distearate, pentaerythritol dioleate, pentaerythritol dibehenate, pentaerythritol dimontanate, pentaerythritol monostearate, pentaerythritol monooleate, pentaerythritol trimonobehenate, pentaerythritol monomontanate.

6. Compositions according to one or more of the preceding claims, where each of the compounds a), b) and c) has been selected from:
compound a): diethylene glycol dibenzoate, triethylene glycol dibenzoate, dipropylene glycol dibenzoate and tripropylene glycol dibenzoate
compound b): ethylenediaminebisstearylamide and erucamide
compound c): glycerol stearate, stearyl stearate and pentaerythritol tetrastearate.

7. Compositions according to one or more of the preceding claims, where the quantitative proportions (a):(b) and, respectively, (a):(b+c) and, respectively, (a) : (c) = from 10:1 to 1:5.

8. Compositions according to one or more of the preceding claims, comprising from 1.5 to 6 parts by weight of C) per 100 parts by weight of A+B.

9. Compositions according to one or more of the preceding claims, where component B.2 has been selected from diene rubbers and alkyl acrylate rubbers.

10. Compositions according to one or more of the preceding claims, comprising processing aids, stabilizers, pigments, antistatic agents and/or fillers.

11. Use of the compositions according to one or more of the preceding claims for production of mouldings.

12. Mouldings obtainable from compositions according to one or more of the preceding claims.

13. Use of an additive combination comprising a) at least one dibenzoate of di- or trialkylene glycols and b) at least one compound having at least one structural unit 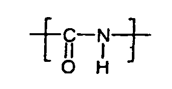 and/or c) at least one compound having at least one structural unit 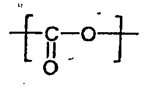 in ABS moulding materials.

## Revendications

1. Compositions comprenant
A) de 5 à 95 % en poids d'un ou de plusieurs homopolymères, copolymères ou terpolymères thermoplastiques de styrène, de α-méthylstyrène, d'un styrène substitué sur le noyau, de méthacrylate de méthyle, de l'acrylonitrile, de méthacrylonitrile, de l'anhydride maléique, de maléimide N-substitué ou de leurs mélanges,
B) de 5 à 95 % en poids d'un ou de plusieurs polymères greffés de
B.1) de 5 à 90 parties en poids de styrène, de α-méthylstyrène, de styrène substitué sur le noyau, de méthacrylate de méthyle, d'acrylonitrile, de méthacrylonitrile, d'anhydride maléique, de maléimide N-substitué ou de leurs mélanges, sur
B.2) de 95 à 10 parties en poids d'au moins un caoutchouc présentant une température de transition vitreuse ≤ 10°C,
et
C) de 0,5 à 10 parties en poids (pour 100 parties en poids de A) + B)) d'une combinaison de a) au moins un dibenzoate de dialkylèneglycols ou de trialkylèneglycols et b) au moins un composé renfermant au moins un motif structural 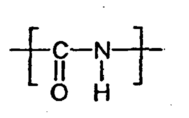 et/ou c) au moins un composé renfermant au moins un motif structural

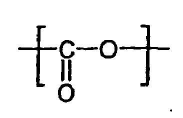

2. Compositions selon la revendication 1, dans lesquelles chacun des composés b) et c) renferme au moins un radical hydrocarboné en C₆-C₃₂ terminal.

3. Compositions selon la revendication 1 ou 2, dans lesquelles le composé a) est choisi parmi le dibenzoate de diéthylèneglycol, le dibenzoate de triéthylèneglycol, le dibenzoate de dipropylèneglycol, le dibenzoate de tripropylèneglycol ou leurs mélanges.

4. Compositions selon la revendication 1 ou 2, dans lesquelles le composé b) est choisi parmi l'éthylènediamine-bisstéarylamide, l'érucamide, l'oléamide, le stéaramide, le béhénamide, le montanamide.

5. Compositions selon la revendication 1 ou 2, dans lesquelles le composé c) est choisi parmi le tristéarate de glycérol, le trioléate de glycérol, le tribéhénate de glycérol, le trimontanate de glycérol, le stéarate de stéaryle, l'oléate de stéaryle, le béhénate de stéaryle, le montanate de stéaryle, le stéarate d'oléyle, l'oléate d'oléyle, le béhénate d'oléyle, le montanate d'oléyle, le stéarate de béhényle, l'oléate de béhényle, le béhénate de béhényle, le montanate de béhényle, le stéarate d'octyle, le stéarate d'iso-octyle, le stéarate de dodécyle, l'oléate de dodécyle, le monostéarate de glycérol, le distéarate de glycérol, le mono-oléate de glycérol, le dioléate de glycérol, le tétrastéarate de pentaérythritol, le tétraoléate de pentaérythritol, le tétrabéhénate de pentaérythritol, le tétramontanate de pentaérythritol, le tristéarate de pentaérythritol, le trioléate de pentaérythritol, le tribéhénate de pentaérythritol, le trimontanate de pentaérythritol, le distéarate de pentaérythritol, le dioléate de pentaérythritol, le dibéhénate de pentaérythritol, le dimontanate de pentaérythritol, le monostéarate de pentaérythritol, le mono-oléate de pentaérythritol, le trimonobéhénate de pentaérythritol, le monomontanate de pentaérythritol.

6. Compositions selon l'une ou plusieurs des revendications précédentes, dans lesquelles les composés a), b) et c) sont chacun choisis parmi :
composé a) : le dibenzoate de diéthylèneglycol, le dibenzoate de triéthylèneglycol, le dibenzoate de dipropylèneglycol et le dibenzoate de tripropylèneglycol,
composé b) : l'éthylènediamine-bisstéarylamide et l'érucamide,
composé c) : le stéarate de glycérol, le stéarate de stéaryle et le tétrastéarate de pentaérythritol.

7. Compositions selon l'une ou plusieurs des revendications précédentes, dans lesquelles les rapports de quantités (a) : (b) ou (a) : (b+c) ou (a) : (c) = de 10 : 1 à 1 : 5.

8. Compositions selon l'une ou plusieurs des revendications précédentes, comprenant de 1,5 à 6 parties en poids de C) pour 100 parties en poids de A+B.

9. Compositions selon l'une ou plusieurs des revendications précédentes, dans lesquelles le composant B.2 est choisi parmi des caoutchoucs diéniques ou d'acrylate d'alkyle.

10. Compositions selon l'une ou plusieurs des revendications précédentes, comprenant des auxiliaires de mise en oeuvre, des agents stabilisants, des pigments, des agents antistatiques et/ou des charges.

11. Utilisation des composés selon l'une ou plusieurs des revendications précédentes pour la production de pièces moulées.

12. Pièces moulées pouvant être obtenues à partir de compositions selon l'une ou plusieurs des revendications précédentes.

13. Utilisation d'une combinaison d'additifs comprenant a) au moins un dibenzoate de dialkylèneglycols ou de trialkylèneglycols et b) au moins un composé renfermant au moins un motif structural 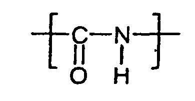 et/ou c) au moins un composé renfermant au moins un motif structural 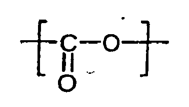 dans des matières moulables d'ABS.
